# EUROPÄISCHE PATENTSCHRIFT

(11) **EP 3 572 634 B1**
(45) Veröffentlichungstag und Bekanntmachung des Hinweises auf die Patenterteilung: **16.12.2020**
(21) Anmeldenummer: 19175604.8
(22) Anmeldetag: 21.05.2019
(51) Int. Cl.: F01N 9/00, F01N 3/10, F01N 13/00, F02D 41/02, F02D 41/14

(54) **VERFAHREN UND VORRICHTUNG ZUR ABGASNACHBEHANDLUNG EINES VERBRENNUNGSMOTORS**
METHOD AND DEVICE FOR TREATING THE WASTE GAS PRODUCED BY A COMBUSTION ENGINE
PROCÉDÉ ET DISPOSITIF DE TRAITEMENT DES GAZ D'ÉCHAPPEMENT D'UN MOTEUR À COMBUSTION INTERNE

(30) Priorität: 22.05.2018 DE 102018112263
(43) Veröffentlichungstag der Anmeldung: 27.11.2019
(73) Patentinhaber: Volkswagen AG, 38440 Wolfsburg (DE)
(72) Erfinder: NEE, Christoph, 38446 Wolfsburg (DE)
(74) Vertreter: Gulde & Partner

(56) Entgegenhaltungen:
- DE-A1-102010 002 586
- DE-A1-102015 212 514
- DE-A1-102016 211 595

## Beschreibung

Die Erfindung betrifft ein Verfahren zur Abgasnachbehandlung eines Verbrennungsmotors sowie ein Abgasnachbehandlungssystem zur Durchführung eines solchen Verfahrens gemäß den Oberbegriffen der unabhängigen Patentansprüche.

Künftige Abgasgesetzgebungen stellen hohe Anforderungen an motorische Rohemissionen und an die Abgasnachbehandlung von Verbrennungsmotoren. Mit Einführung der Abgasgesetzgebung Euro 6d-Temp müssen die Kraftfahrzeuge die Emissionsgrenzen in einem realitätsnahen Betrieb (Real Driving Emissions) einhalten. Der Einsatz von mehrstufigen Abgasnachbehandlungskonzepten im Ottomotor-Umfeld wirft für neue Abgasvorschriften Fragen hinsichtlich der Regelbarkeit der verschiedenen Abgasnachbehandlungskomponenten sowie der Regelgüte und Betriebsbereitschaft der Abgasnachbehandlungskomponenten auf. Dabei zeigt sich, dass ein Lambdaregelungskonzept mit starr ausgelegtem Regelsystem nur suboptimale Emissionsergebnisse liefert.

Aus der DE 10 2010 002 586 A1 ist ein Verfahren zum Betreiben eines Verbrennungsmotors für ein Kraftfahrzeug mit einem Abgassystem bekannt, in welchem mindestens ein Katalysator und wenigstens eine Lambdasonde angeordnet sind. Der Verbrennungsmotor wird nach einem Kaltstart zum Aufheizen des Katalysators im Wechsel mit magerem und fettem Kraftstoff-Luft-Gemisch betrieben. Die Lambdasonde wird nach dem Kaltstart so beheizt, dass sie nach maximal zehn Sekunden betriebsbereit ist und der Verbrennungsmotor mit einer auf einem Signal der Lambdasonde basierenden Zweipunktregelung betrieben wird. Dabei wird ein Wechsel zwischen dem Betrieb mit magerem Kraftstoff-Luft-Gemisch und mit fettem Kraftstoff-Luft-Gemisch jeweils durch das Signal der Lambdasonde ausgelöst.

Aus der DE 10 2013 201 734 A1 ist ein Verfahren zum Betreiben einer Lambdasondenanordnung im Abgassystem eines Verbrennungsmotor mit wenigstens einer ersten Lambdasonde stromaufwärts eine Katalysators und wenigstens einer zweiten Lambdasonde stromabwärts des Katalysators bekannt. Dabei ist die zweite Lambdasonde als Sprungsonde ausgebildet. Dabei wird eine Diagnose eines Kennlinienoffsets der erste Lambdasonde und gegebenenfalls eine Adaption eines Kennlinienoffsetfehlers vorgenommen. Dabei wird für die Diagnose bei aktiver Lambdaverstellung ein Wert, welcher die Sauerstoffspeicherfähigkeit des Katalysators repräsentiert, und ein weiterer Wert, der die Sauerstoffaustragungsfähigkeit aus dem Katalysator repräsentiert, erfasst. Aus dem Verhältnis von Sauerstoffspeicherfähigkeit und Sauerstoffaustragungsfähigkeit wird ein Kennlinienoffset der ersten Lambdasonde berechnet.

Die EP 2 884 066 A1 offenbart ein Verfahren zur Diagnose eines Gegenstandes wie eines Katalysators oder eines Filters. Um eine besonders genaue Aussage über eine Funktion des Katalysators zu erhalten, ist dabei vorgesehen, dass zur Messung einer katalytischen Reaktivität eine Stirnseite des Katalysators mit einem Prüfmedium mit definierter Zusammensetzung wie Propangas oder Kohlenmonoxid mittels einer Einrichtung durch eine Öffnung beaufschlagt wird und an einer stromabwärts gelegenen Position eine Konzentration von zumindest einem reduzierten oder oxidierten Bestandteil des Prüfmediums nach Passieren des Katalysators gemessen wird. Eine solche Beaufschlagung mit einem definiert zusammengesetzten (Ab-)Gas ist jedoch nur im Laborbetrieb möglich. Daher eignet sich ein solches Verfahren nicht zur Optimierung der Emissionen im realen Fahrbetrieb.

Aus der DE 10 2016 211 595 A1 sind ein Verfahren und eine Vorrichtung zur Steuerung und/oder Überwachung der Funktion einer Sekundärluftzuführung in einer Abgasreinigungsanlage einer Brennkraftmaschine mit zumindest zwei in einem Abgaskanal nacheinander angeordneten Katalysatoren bekannt. Dabei kann der zweite Katalysator als Kombination von einem Katalysator und einem Partikelfilter ausgeführt sein. Es ist vorgesehen, dass für eine Sekundärluftdiagnose und zur Sekundärluftregelung eine Zweipunkt-Lambdasonde in Strömungsrichtung des Abgases hinter dem ersten Katalysator verwendet wird und für diese bestimmte Maßnahmen zur Kompensation von Toleranz- und Alterungseffekten angewendet werden. Damit ergeben sich insbesondere Kostenvorteile bei Abgasreinigungssystemen zur Erfüllung von strengeren Emissionsanforderungen.

DE 10 2015 212 514 A1 beschreibt ein Verfahren und eine Vorrichtung zur Abgasnachbehandlung einer Brennkraftmaschine. Die Brennkraftmaschine ist mit einem Abgaskanal verbunden, wobei im Abgaskanal ein erster Drei-Wege-Katalysator und ein in Strömungsrichtung des Abgases nachfolgenden Partikelfilter angeordnet sind. Dabei sind in Strömungsrichtung des Abgases vor dem Partikelfilter Mittel zur Sekundärlufteinbringung in den Abgaskanal und ein zweiter Drei-Wege-Katalysator im Abgaskanal angeordnet.

Nachteilig an den bekannten Verfahren ist jedoch, dass sie das temperaturabhängige Konvertierungsverhalten der Katalysatoren nur unzureichend berücksichtigen und somit, insbesondere in einer Startphase oder nach einer Betriebsphase, in der das Abgassystem ausgekühlt ist, nur zu einer suboptimalen Abgasnachbehandlung führen.

Der Erfindung liegt nun die Aufgabe zugrunde, das Konvertierungsverhalten der in der Abgasanlage des Verbrennungsmotors angeordneten Katalysatoren zu verbessern und somit die Schadstoff-Emissionen im realen Fahrbetrieb weiter zu reduzieren.

Erfindungsgemäß wird diese Aufgabe durch ein Verfahren zur Abgasnachbehandlung eines Verbrennungsmotors, dessen Auslass mit einer Abgasanlage verbunden ist, gelöst, wobei in der Abgasanlage in Strömungsrichtung eines Abgases des Verbrennungsmotors durch einen Abgaskanal der Abgasanlage ein erster Drei-Wege-Katalysator und stromabwärts des ersten Drei-Wege-Katalysators mindestens ein weiterer Drei-Wege-Katalysator angeordnet sind. Dabei sind in dem Abgaskanal stromaufwärts des ersten Drei-Wege-Katalysators eine erste Lambdasonde und stromabwärts des ersten Drei-Wege-Katalysators und stromaufwärts des weiteren Drei-Wege-Katalysators eine weitere Lambdasonde angeordnet. Das Verfahren umfasst mindestens folgende Schritte:
- Ermitteln der Bauteiltemperaturen des ersten und des zweiten Drei-Wege-Katalysators
- Vergleich der Bauteiltemperaturen des ersten und des zweiten Drei-Wege-Katalysators mit den jeweiligen Light-Off-Temperaturen der Drei-Wege-Katalysatoren
- Lambdaregelung des Verbrennungsmotors über diejenige Lambdasonde stromaufwärts des in Strömungsrichtung letzten Drei-Wege-Katalysators, welcher seine Light-Off-Temperatur erreicht hat.

Durch ein erfindungsgemäßes Verfahren ist es möglich, die aktuell vorherrschenden Bauteiltemperaturen an den Drei-Wege-Katalysatoren zu berücksichtigen, um die Lambdaregelung auf die jeweils größtmögliche Regelstrecke auszudehnen und somit variabel auf die aktuell in der Abgasanlage vorherrschenden Bedingungen anzupassen.

Durch die in den abhängigen Ansprüchen aufgeführten Merkmale sind vorteilhafte Weiterentwicklungen und Verbesserungen des im unabhängigen Anspruchs genannten Verfahrens möglich.

In bevorzugter Ausgestaltung der Erfindung ist vorgesehen, dass die Lambdaregelung nach dem Prinzip der Eigenfrequenzregelung erfolgt. Unter einer Eigenfrequenz-Lambdaregelung ist im Kontext dieser Patentanmeldung ein Regelsystem zu verstehen, bei dem das verwendete Katalysatorvolumen vollständig bis zum Mager- oder Fettdurchbruch der jeweils vorgesteuerten Komponente durchströmt wird. Dadurch kann an der Lambdasonde stromabwärts des durchströmten Katalysatorvolumens das "Durchbrechen" der Komponente detektiert werden und erst dann auf die andere Vorsteuerung umgeschaltet werden. Dieses Vorgehen macht ein nachgelagertes Konvertervolumen durch einen weiteren Katalysator, insbesondere einen weiteren Drei-Wege-Katalysator, unverzichtbar. Wird die Lambdaregelung nach dem Prinzip der Eigenfrequenzregelung ausgeführt, so kann das komplette Konvertervolumen des Katalysators zur Umsetzung der Emissionen genutzt werden. Ferner werden dabei Alterungshotspots im Katalysator durch die alternative bilanzierte Umschaltung vor Durchbruch vermieden, wodurch die Lebensdauer des Katalysators erhöht wird. Darüber hinaus ist ein schnelles Ausregeln der Lambdamittellage über das gesamte Abgassystem möglich, wobei ein Offset adaptiert werden kann. Dadurch ist eine besonders wirksame Abgasnachbehandlung mit minimalen Emissionen möglich.

In einer bevorzugten Ausführungsform des Verfahrens ist vorgesehen, dass nach einem Kaltstart des Verbrennungsmotors die Lambdaregelung durch die erste Lambdasonde stromaufwärts des ersten Drei-Wege-Katalysators erfolgt. Nach einem Start des Verbrennungsmotors erwärmt sich zunächst der motornahe erste Katalysator und erreicht in der Regel als erste Komponenten der Abgasnachbehandlung seine Light-Off-Temperatur T_{LOK1}. Daher ist es zielführend, in der Startphase eine optimale Konvertierung der Abgase durch den ersten Drei-Wege-Katalysator anzustreben, bis die in Strömungsrichtung des Abgases durch den Abgaskanal weiter stromabwärts liegenden Abgasnachbehandlungskomponenten ebenfalls ihre Light-Off-Temperatur erreicht haben.

Bevorzugt ist dabei, wenn bei Erreichen der Light-Off-Temperatur eines weiter stromabwärts in der Abgasanlage angeordneten Drei-Wege-Katalysators die Lambdaregelung durch die Lambdasonde stromaufwärts dieses weiteren Drei-Wege-Katalysators erweitert wird. Durch eine Erweiterung der Lambdaregelung nach Erreichen der Light-Off-Temperatur T_{LOK2} des zweiten Drei-Wege-Katalysators können beide Drei-Wege-Katalysatoren unter möglichst idealen Betriebsbedingungen zur Konvertierung von Schadstoffen betrieben werden, sodass ein Emissionsoptimum für die Abgasnachbehandlung erreicht wird.

In einer bevorzugten Ausführungsform der Erfindung ist vorgesehen, dass das Abgasnachbehandlungssystem zusätzlich einen Partikelfilter umfasst, wobei zusätzlich zu den Bauteiltemperaturen der Drei-Wege-Katalysatoren auch die Bauteiltemperatur des Partikelfilters ermittelt wird. Da ab der Emissionsgesetzgebung Euro 6 auch für Ottomotoren ein Grenzwert für die Partikelemissionen vorgeschrieben ist, kann es für eine Vielzahl von Kraftfahrzeugen mit Ottomotor notwendig sein, einen Partikelfilter in der Abgasnachbehandlung einzusetzen. Der Partikelfilter kann einen Beschichtung aufweisen, welche eine Drei-Wege-Katalytische Wirkung aufweist. Ein solcher Partikelfilter wird als Vier-Wege-Katalysator bezeichnet. Im Kontext dieser Patentanmeldung ist ein solcher Vier-Wege-Katalysator auch als Drei-Wege-Katalysator zu verstehen, da er die Funktion eines Drei-Wege-Katalysators erfüllt.

Bevorzugt ist dabei, wenn oberhalb einer Schwellentemperatur für den Partikelfilter eine Regenerationsmöglichkeit für den Partikelfilter erkannt wird. Um die im Partikelfilter zurückgehaltenen Rußpartikel zu oxidieren und den Partikelfilter zu regenerieren ist ein Sauerstoffüberschuss am Partikelfilter und eine zeitgleiche Mindesttemperatur von 550°C notwendig. Wird eine solche Temperatur erkannt, kann auf einfache Art und Weise durch eine Verstellung des Verbrennungsluftverhältnisses in Richtung "mager", d.h. in Richtung eines überstöchiometrischen Verbrennungsluftverhältnisses eine (Teil-)Regeneration des Partikelfilters durchgeführt werden.

Besonders bevorzugt ist, wenn bei Erkennen einer Notwendigkeit zur Regeneration des Partikelfilters und gleichzeitigem Erkennen einer Bauteiltemperatur des Partikelfilters oberhalb der Schwellentemperatur der Verbrennungsmotor mit einem überstöchiometrischen Verbrennungsluftverhältnis betrieben wird. Durch den überstöchiometrischen Betrieb wird der im Partikelfilter zurückgehaltene Ruß oxidiert.

In einer weiteren Verbesserung des Verfahrens ist vorgesehen, dass mittels des Regelkonzeptes eine überstöchiometrische Amplitude so gewählt wird, dass im relevanten Temperaturbereich eine kontinuierliche Regeneration des im Partikelfilter zurückgehaltenen Rußes stattfindet. Durch die Wahl einer geeigneten Amplitude ist es möglich, dass es während der Regeneration des Partikelfilters zu keinem Magerdurchbruch durch den zweiten Drei-Wege-Katalysator und damit verbunden zu einem Anstieg der Stickoxid-Emissionen kommt. Somit kann eine im Wesentlichen emissionsneutrale Regeneration des Partikelfilters erfolgen.

Besonders bevorzugt ist dabei, wenn ausschließlich für den Partikelfilter eine entsprechend höhere Menge an Sauerstoff im Abgas bereitgestellt wird und die Drei-Wege-Katalysatoren innerhalb der Regelschwingungen mit einem im Wesentlichen stöchiometrischen Abgas durchströmt werden. Dabei kann die Amplitude der Lambdaregelung so gewählt werden, dass die Sauerstoffspeicher der Drei-Wege-Katalysatoren, insbesondere des zweiten Drei-Wege-Katalysators befüllt oder entleert werden, ohne dass es zu einem Mager- oder Fettdurchbruch durch den jeweiligen Drei-Wege-Katalysator kommt. Dadurch ist es möglich, einen Anstieg von Sekundäremissionen während der Regeneration des Partikelfilters zu vermeiden.

Erfindungsgemäß wird ein Abgasnachbehandlungssystem für einen Verbrennungsmotor mit einer Abgasanlage, in welcher in Strömungsrichtung eines Abgases durch einen Abgaskanal der Abgasanlage ein erster Drei-Wege-Katalysator und stromabwärts des ersten Drei-Wege-Katalysators mindestens ein weiterer Drei-Wege-Katalysators angeordnet sind, vorgeschlagen, wobei stromaufwärts des ersten Drei-Wege-Katalysators und stromabwärts des ersten Drei-Wege-Katalysators und stromaufwärts des zweiten Drei-Wege-Katalysators eine weitere Lambdasonde angeordnet ist, sowie mit einem Steuergerät, welches dazu eingerichtet ist, ein erfindungsgemäßes Verfahren durchzuführen, wenn ein maschinenlesbarer Programmcode durch das Steuergerät ausgeführt wird. Durch ein erfindungsgemäßes Abgasnachbehandlungssystem ist es möglich, die jeweilige Betriebsbereitschaft und deren Konvertierungsleistung in Abhängigkeit von der Bauteiltemperatur zu berücksichtigen und somit eine emissionsoptimale Abgasnachbehandlung zu gewährleisten. Ferner können in der Abgasnachbehandlung besondere Betriebssituationen wie beispielsweise die Regeneration eines Partikelfilters berücksichtigt werden, um das Ergebnis der Abgasnachbehandlung weiter zu verbessern und Sekundäremissionen zu vermeiden.

In einer bevorzugten Ausführungsform des Abgasnachbehandlungssystems ist vorgesehen, dass stromabwärts des ersten Drei-Wege-Katalysators und stromaufwärts des zweiten Drei-Wege-Katalysators ein Partikelfilter angeordnet ist. Da ab der Emissionsgesetzgebung Euro 6 auch für Ottomotoren ein Grenzwert für die Partikelemissionen vorgeschrieben ist, kann es für eine Vielzahl von Kraftfahrzeugen mit Ottomotor notwendig sein, einen Partikelfilter in der Abgasnachbehandlung einzusetzen. Somit können neben den gasförmigen Abgasbestandteilen auch die Partikel aus dem Abgas entfernt werden.

Der Partikelfilter kann eine katalytisch wirksame Beschichtung aufweisen und als Vier-Wege-Katalysator ausgebildet sein. Durch eine katalytisch wirksame Beschichtung auf dem Partikelfilter erfüllt dieser zusätzlich die Funktion eines Drei-Wege-Katalysators. Somit kann das insgesamt zur Konvertierung von Schadstoffen zur Verfügung stehende Katalysatorvolumen gesteigert werden, um insbesondere bei hoher Last zusätzliches Katalysatorvolumen zur Verfügung zu stellen und einen Anstieg der Emissionen im realen Fahrbetrieb zu vermeiden.

Bevorzugt ist dabei, wenn stromabwärts des ersten Drei-Wege-Katalysators und stromaufwärts des Partikelfilters eine zweiten Lambdasonde und stromabwärts des Partikelfilters und stromaufwärts des zweiten Drei-Wege-Katalysators eine dritte Lambdasonde im Abgaskanal angeordnet ist. Dadurch ist eine Lambdaregelung auf jede Drei-Wege-Katalytisch-wirksame Komponente der Abgasnachbehandlung möglich, sodass ein bezüglich der Konvertierungsleistung optimales Ergebnis erzielt werden kann.

In einer vorteilhaften Ausführungsform der Erfindung ist ein Sekundärluftsystem vorgesehen, mit welche in den Auslass des Verbrennungsmotors oder in die Abgasanlage stromabwärts des Auslasses und stromaufwärts des ersten Drei-Wege-Katalysators, insbesondere stromabwärts des Auslasses und stromaufwärts einer Turbine eines Abgasturboladers, Sekundärluft in den Abgaskanal einblasbar ist. Durch ein Sekundärluftsystem kann das Aufheizen der Drei-Wege-Katalysatoren nach einem Kaltstart des Verbrennungsmotors beschleunigt werden. Zudem kann der zur Regeneration des Partikelfilters notwendige Sauerstoff geliefert werden, ohne dass der Verbrennungsmotor mit einem überstöchiometrischen Verbrennungsluftgemisch betrieben werden muss und die Rohemissionen des Verbrennungsmotors, insbesondere die Emissionen an Stickoxiden, ansteigen.

Die Erfindung wird nachfolgend in Ausführungsbeispielen anhand der zugehörigen Zeichnungen erläutert. Es zeigen:
- Figur 1: einen Verbrennungsmotor mit einem Abgasnachbehandlungssystem zur Durchführung eines erfindungsgemäßen Verfahrens; und
- Figur 2: ein Ablaufdiagramm zur Durchführung eines erfindungsgemäßen Verfahrens zur Abgasnachbehandlung eines Verbrennungsmotors.

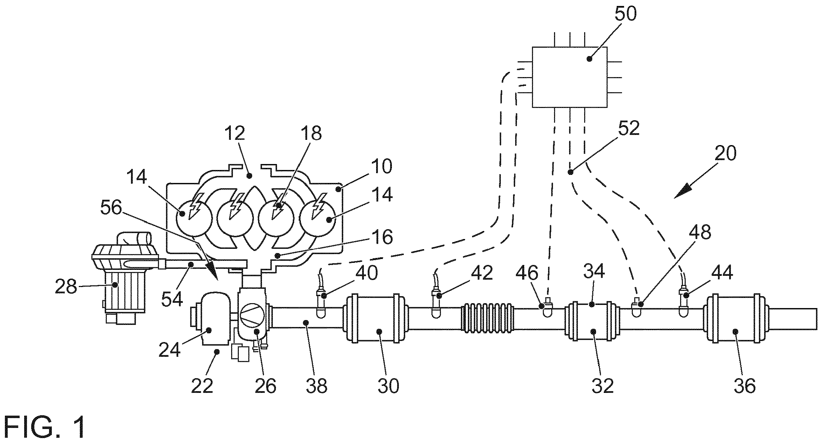

Figur 1 zeigt einen Verbrennungsmotor 10, welcher als mittels Zündkerzen 18 fremdgezündeter Ottomotor ausgeführt ist. Der Verbrennungsmotor 10 weist einen Einlass 12, eine Mehrzahl von Brennräumen 14 und einen Auslass 16 auf. Der Auslass 16 des Verbrennungsmotors 10 ist mit einer Abgasanlage 20 verbunden. Der Verbrennungsmotor 10 ist vorzugsweise als mittels eines Abgasturboladers 22 aufgeladener Verbrennungsmotor 10 ausgeführt. Dazu weist der Abgasturbolader 22 eine in einem Abgaskanal 38 der Abgasanlage 20 angeordnete Turbine 26 auf, welche einen Verdichter 26 in einem nicht dargestellten Luftversorgungssystem des Verbrennungsmotors 10 antreibt und somit die Füllung der Brennräume 14 verbessert. In dem Abgaskanal 38 sind in Strömungsrichtung eines Abgases durch den Abgaskanal 38 stromabwärts der Turbine 26 ein erster Drei-Wege-Katalysator 30, stromabwärts des ersten Drei-Wege-Katalysators 30 ein Partikelfilter 32 und stromabwärts des Partikelfilters 32 ein zweiter Drei-Wege-Katalysator 36 angeordnet. Der Partikelfilter 32 kann eine Drei-Wege-katalytisch-wirksame Beschichtung aufweisen und als sogenannter Vier-Wege-Katalysator 34 ausgebildet sein. Stromabwärts der Turbine 26 des Abgasturboladers 22 und stromaufwärts des ersten Drei-Wege-Katalysators 30 ist eine erste Lambdasonde 40 angeordnet, welche vorzugsweise als Breitband-Lambdasonde ausgebildet ist. Stromabwärts des ersten Drei-Wege-Katalysators 30 und stromaufwärts des Partikelfilters 32 oder des Vier-Wege-Katalysators 34 ist eine zweite Lambdasonde 42 angeordnet. Stromabwärts des Partikelfilters 32 oder des Vier-Wege-Katalysators 34 und stromaufwärts des zweiten Drei-Wege-Katalysators 36 ist im Abgaskanal 38 eine dritte Lambdasonde 44 angeordnet. Stromaufwärts des ersten Drei-Wege-Katalysators 30 und stromaufwärts des Partikelfilters 32 oder des Vier-Wege-Katalysators 34 ist im Abgaskanal 38 ein erster Temperatursensor 46 angeordnet. Stromabwärts des Partikelfilters 32 oder des Vier-Wege-Katalysators 34 und stromaufwärts des zweiten Drei-Wege-Katalysators 36 ist ein zweiter Temperatursensor 48 angeordnet. Die Lambdasonden 40, 42, 44 und die Temperatursensoren 46, 48 sind über Signalleitungen 52 mit einem Steuergerät 50 des Verbrennungsmotors 10 verbunden. An dem Verbrennungsmotor 10 kann ein Sekundärluftsystem 28, 54, 56 vorgesehen sein, welches eine Sekundärluftpumpe 28, eine Sekundärluftleitung 54 und ein Sekundärluftventil 56 umfasst. Die Sekundärluftleitung 54 mündet in den auslassseitigen Zylinderkopf des Verbrennungsmotors 10 oder in einen Abschnitt des Abgaskanals 38 stromaufwärts des ersten Drei-Wege-Katalysators 30, insbesondere stromabwärts des Auslasses 16 und stromaufwärts der Turbine 26 des Abgasturboladers 22.

Die Erfindung sieht ein Lambdaregelungskonzept vor, welches die Kenntnis über die Bauteiltemperatur (T_{K1}, T_{K2}, T_{OPF}) der jeweiligen Abgasnachbehandlungskomponente 30, 32, 34, 36 berücksichtigt und seine Regelamplitude und Trimmregelung auf die größtmögliche Regelstrecke anpasst. Weiterhin finden sich die Randbedingungen der Abgasnachbehandlungskomponenten 30, 32, 34, 36 in der Regelamplitude und den Parametern der Regelstrecke wieder, sodass eine optimale Einstellung hinsichtlich des jeweils geltenden Emissionsbestpunktes erreicht wird.

Die Erfindung umfasst eine Lambdaregelung nach dem Prinzip der Eigenfrequenzregelung für ein mehrstufiges Abgasnachbehandlungssystem mit mehr als einem Katalysator. Dabei wird entweder über eine Sensorik, insbesondere über die in Fig. 1 dargestellten Temperatursensoren 46, 48 oder über ein Abgastemperaturmodell die aktuell vorherrschende Bauteiltemperatur T_{K1}, T_{K2}, T_{OPF} der Abgasnachbehandlungskomponenten 30, 32, 34, 36, insbesondere der Drei-Wege-Katalysatoren 30, 36, berücksichtigt, um die Eigenfrequenz auf die jeweils größtmögliche Regelstrecke auszudehnen. Im Fall eines ausschließlich durchwärmten ersten Drei-Wege-Katalysators 30 wird mittels der ersten Lambdasonde 40 und der für diese Regelstrecke bekannten Regelstreckenparameter die Eigenfrequenz über diese Abgasstufe aufgespannt. Sobald durch das vom Kunden gewählte Fahrprofil auch die weiteren Abgasnachbehandlungskomponenten 32, 34, 36 durchwärmt sind und ihre Light-Off-Temperatur T_{LOK2} erreicht haben, wird die Lambdaregelung automatisch auf diese weiteren Abgasnachbehandlungskomponenten 32, 34, 36, insbesondere auf den zweiten Drei-Wege-Katalysator 36, ausgedehnt und es wird jeweils diejenige Lambdasonde 42, 44 vor der letzten aktivierten Abgasnachbehandlungskomponente zur Auswertung von Regeldurchbrüchen herangezogen. Bei einem Wegfall der Aktivierungsbedingungen einer stromabwärtigen Abgasnachbehandlungskomponente, insbesondere bei einem Abkühlen der Abgasanlage 20 oder durch gezieltes Abschalten dieser Abgasnachbehandlungskomponenten 32, 34, 36, wird die Lambdaregelung auf die minimale Regelausprägung, das heißt auf eine ausschließliche Regelung durch die erste Lambdasonde 40 zurückgefahren. Darüber hinaus können die Besonderheiten der jeweiligen Abgasnachbehandlungskomponente 30, 32, 34, 36 bei der Lambdaregelung berücksichtigt werden. Bei einem Einsatz eines, vorzugsweise motornah als erste Komponente der Abgasnachbehandlung, angeordneten HC-Adsorbers wird die Lambdaregelung so ausgelegt, dass eher überschüssige unverbrannte Kohlenwasserstoffe (HC) während des Kaltstarts des Verbrennungsmotors 10 entstehen, da diese in dem HC-Adsorber eingelagert werden können. Eine überstöchiometrische Regelstrategie ist in diesem Falle nicht zielführend.

Bei Einsatz eines Partikelfilters 32, 34 lässt sich mittels des vorgeschlagenen Konzeptes zur Lambdaregelung eine überstöchiometrische Regelamplitude so wählen, dass im relevanten Temperaturbereich eine kontinuierliche Regeneration des im Partikelfilter 32, 34 zurückgehaltenen Rußes stattfindet. Dabei kann anhand der bekannten Streckenzeiten eine Formung der Regelamplitude derart gewählt werden, dass nur für den Partikelfilter 32, 34 eine entsprechend höhere Menge an Sauerstoff im Abgas bereitgestellt wird und für die Drei-Wege-Katalysatoren 30, 36 ein stöchiometrischer Betrieb innerhalb einer Regelschwingung möglich ist. Somit kann durch das Verfahren ein Emissionsoptimum erreicht werden.

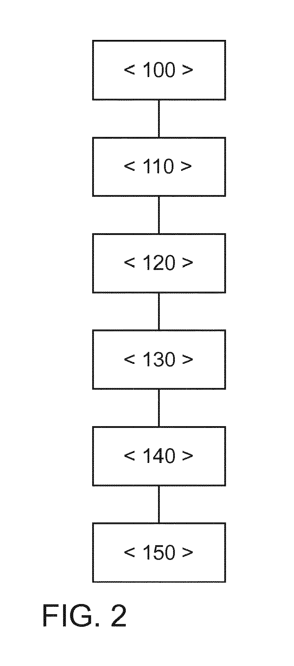

In Fig. 2 ist ein Ablaufdiagramm eines erfindungsgemäßen Verfahrens zur Abgasnachbehandlung dargestellt. Wird der Verbrennungsmotor 10 gestartet, so werden in einem ersten Verfahrensschritt <100> die Bauteiltemperaturen T_{K1}, T_{K2} der Drei-Wege-Katalysatoren 30, 36 und gegebenenfalls weiterer vorhandener Abgasnachbehandlungskomponenten 32, 34 ermittelt. In einem Verfahrensschritt <110> werden diese Temperaturen T_{K1}, T_{K2} dann mit der jeweiligen Light-Off-Temperatur T_{LOK1}, T_{LOK2} verglichen. Zunächst wird die Eigenfrequenzregelung auf den ersten Drei-Wege-Katalysator 30 begrenzt und ein durch die zweite Lambdasonde 42 erkannter Mager- oder Fettdurchbruch durch den ersten Drei-Wege-Katalysator 30 für die Umschaltung der Regelamplitude, d.h. für ein Umschalten zwischen einem leicht unterstöchiometrischen Betrieb auf einen leicht überstöchiometrischen Betrieb und andersrum bewertet.

In einem Verfahrensschritt <120> erwärmen sich bei fortlaufendem Betrieb des Verbrennungsmotors 10 auch die stromabwärts des ersten Drei-Wege-Katalysators 30 angeordneten weiteren Abgasnachbehandlungskomponenten 32, 34, 36 und erreichen ihre Light-Off-Temperatur T_{LOK2}. Ist die Light-Off-Temperatur T_{LOK2} am zweiten Drei-Wege-Katalysator 36 erreicht, so wird die Lambdaregelung auf die dritte Lambdasonde 44 und gegebenenfalls weitere Lambdasonden ausgedehnt. Beim Betrieb der Eigenfrequenzregelung über mehrere Drei-Wege-Katalysatoren 30, 36 können nun besondere Anforderungen an die Abgasnachbehandlung Berücksichtigung finden. Hierzu zählen insbesondere ein Aufheizbetrieb, die Regeneration des Partikelfilters 32, 34 oder eine Diagnosefunktion der Abgasnachbehandlungskomponenten 30, 32, 34, 36 und/oder der Lambdasonden 40, 42, 44.

Wird in einem Verfahrensschritt <130> eine Bauteiltemperatur des Partikelfilters 32, 34 von 550°C oder mehr ermittelt, so wird eine Oxidation des im Partikelfilter zurückgehaltenen Rußes möglich. Dazu wird in einem Verfahrensschritt <140> zusätzlicher Sauerstoff durch ein Verstellen des Verbrennungsluftgemischs des Verbrennungsmotors 10 auf ein überstöchiometrisches Gemisch oder durch Einblasen von Sekundärluft in die Abgasanlage 20 bereitgestellt. Auf Grund der kontinuierlichen Lambdamessung und Adaption der Streckenparameter der Regelstrecke ist die Gaslaufzeit durch die Abgasanlage 20 bis zum Partikelfilter 32, 34 bekannt und kann bei der Vorsteuerung der Amplitude für den überstöchiometrischen Betriebsabschnitt berücksichtigt werden. Sobald ein Magerdurchbruch an der zweiten Lambdasonde 42 stromabwärts des ersten Drei-Wege-Katalysators 30 erkannt wird, wird in einem Verfahrensschritt <150> eine gewisse zusätzliche Sauerstoffmenge in die Abgasanlage 20 eingetragen und sorgt somit für einen Austrag der Rußmasse aus dem Partikelfilter 32, 34.

Bei der Verwendung eines HC-Adsorbers kann die Beladung des HC-Adsorbers ebenfalls bilanziert und in der Gestaltung der überstöchiometrischen Amplitude berücksichtigt werden, um den HC-Adsorber zu regenerieren.

### Bezugszeichenliste

- 10: Verbrennungsmotor
- 12: Einlass
- 14: Brennraum
- 16: Auslass
- 18: Zündkerze

- 20: Abgasanlage
- 22: Abgasturbolader
- 24: Verdichter
- 26: Turbine
- 28: Sekundärluftpumpe

- 30: erster Drei-Wege-Katalysator
- 32: Ottopartikelfilter
- 34: Vier-Wege-Katalysator
- 36: zweiter Drei-Wege-Katalysator
- 38: Abgaskanal

- 40: erste Lambdasonde
- 42: zweite Lambdasonde
- 44: dritte Lambdasonde
- 46: erster Temperatursensor
- 48: zweiter Temperatursensor

- 50: Steuergerät
- 52: Signalleitung
- 54: Sekundärluftleitung
- 56: Sekundärluftventil

## Patentansprüche

1. Verfahren zur Abgasnachbehandlung eines Verbrennungsmotors (10), dessen Auslass (16) mit einer Abgasanlage (20) verbunden ist, wobei in der Abgasanlage (20) in Strömungsrichtung eines Abgases durch die Abgasanlage (20) ein erster Drei-Wege-Katalysator (30) und stromabwärts des ersten Drei-Wege-Katalysators (30) ein zweiter Drei-Wege-Katalysator (34, 36) angeordnet sind, wobei in einem Abgaskanal (38) der Abgasanlage (20) stromaufwärts des ersten Drei-Wege-Katalysators (30) eine erste Lambdasonde (40) und stromabwärts des ersten Drei-Wege-Katalysators (30) und stromaufwärts des zweiten Drei-Wege-Katalysators (34, 36) ein weitere Lambdasonde (42, 44) angeordnet sind, umfassend folgende Schritte:
- Ermitteln der Bauteiltemperaturen (T_{K1}, T_{K2}) des ersten und zweiten Drei-Wege-Katalysators (30, 34, 36),
- Vergleich der Bauteiltemperatur (T_{K1}, T_{K2}) mit der jeweiligen Light-Off-Temperatur (T_{LOK1}, T_{LOK2}) des ersten und zweiten Drei-Wege-Katalysators (30, 34, 36) und
- Lambdaregelung des Verbrennungsmotors (10) über die Lambdasonde (40, 42, 44) stromaufwärts des letzten Drei-Wege-Katalysators (30, 34, 36), welcher seine Light-Off-Temperatur erreicht hat.

2. Verfahren nach Anspruch 1, **dadurch gekennzeichnet, dass** die Lambdaregelung nach dem Prinzip der Eigenfrequenzregelung erfolgt.

3. Verfahren nach Anspruch 1 oder 2, **dadurch gekennzeichnet, dass** die Lambdaregelung nach einem Kaltstart des Verbrennungsmotors (10) durch die erste Lambdasonde (40) stromaufwärts des ersten Drei-Wege-Katalysators (30) erfolgt.

4. Verfahren nach einem der Ansprüche 1 bis 3, **dadurch gekennzeichnet, dass** bei Erreichen der Light-Off-Temperatur (T_{LOK2}) eines weiter stromabwärts in der Abgasanlage (20) angeordneten Drei-Wege-Katalysators (34, 36) die Lambdaregelung durch die Lambdasonde stromaufwärts dieses Drei-Wege-Katalysators (34, 36) erweitert wird.

5. Verfahren nach einem der Ansprüche 1 bis 4, **dadurch gekennzeichnet, dass** das Abgasnachbehandlungssystem (20) zusätzlich einen Partikelfilter (32, 34) umfasst, wobei zusätzlich zu den Bauteiltemperaturen (T_{K1}, T_{K2}) der Drei-Wege-Katalysatoren (30, 34, 36) auch die Bauteiltemperatur (T_{OPF}) des Partikelfilters (32, 34) ermittelt wird.

6. Verfahren nach Anspruch 5, **dadurch gekennzeichnet, dass** oberhalb einer Schwellentemperatur (T_{S}) für den Partikelfilter (32, 34) eine Regenerationsmöglichkeit für den Partikelfilter (32, 34) erkannt wird.

7. Verfahren nach Anspruch 6, **dadurch gekennzeichnet, dass** bei Erkennen einer Notwendigkeit zur Regeneration des Partikelfilters (32, 34) und gleichzeitigem Erkennen einer Bauteiltemperatur (T_{OPF}) oberhalb der Schwellentemperatur (T_{S}) der Verbrennungsmotor (10) mit einem überstöchiometrischen Verbrennungsluftverhältnis (λ > 1) betrieben wird.

8. Verfahren nach einem der Ansprüche 5 bis 7, **dadurch gekennzeichnet, dass** mittels des Regelkonzeptes eine überstöchiometrische Amplitude so gewählt wird, dass im relevanten Temperaturbereich eine kontinuierliche Regeneration des im Partikelfilter (32, 34) zurückgehaltenen Rußes stattfindet.

9. Verfahren nach Anspruch 8, **dadurch gekennzeichnet, dass** ausschließlich für den Partikelfilter (32, 34) eine entsprechend höhere Menge an Sauerstoff im Abgas bereitgestellt wird und die Drei-Wege-Katalysatoren (30, 36) innerhalb der Regelschwingungen mit einem im Wesentlichen stöchiometrischen Abgas durchströmt werden.

10. Abgasnachbehandlungssystem für einen Verbrennungsmotor (10), mit einer Abgasanlage (20), in welcher in Strömungsrichtung eines Abgases durch einen Abgaskanal (38) der Abgasanlage (20) ein erster Drei-Wege-Katalysator (30) und stromabwärts des ersten Drei-Wege-Katalysators (30) mindestens ein weiterer Drei-Wege-Katalysator (34, 36) angeordnet sind, wobei stromaufwärts des ersten Drei-Wege-Katalysators (30) eine erste Lambdasonde (40) und stromabwärts des ersten Drei-Wege-Katalysators (30) und stromaufwärts des zweiten Drei-Wege-Katalysators (34, 36) ein weitere Lambdasonde (42, 44) angeordnet sind, sowie mit einem Steuergerät (50) welches dazu eingerichtet ist, ein Verfahren nach einem der Ansprüche 1 bis 9 durchzuführen, wenn ein maschinenlesbarer Programmcode durch das Steuergerät (50) ausgeführt wird.

11. Abgasnachbehandlungssystem nach Anspruch 10, **dadurch gekennzeichnet, dass** stromabwärts des ersten Drei-Wege-Katalysators (30) und stromaufwärts des zweiten Drei-Wege-Katalysators (36) ein Partikelfilter (32, 34) angeordnet ist.

12. Abgasnachbehandlungssystem nach Anspruch 11, **dadurch gekennzeichnet, dass** der Partikelfilter (32) eine katalytisch wirksame Beschichtung aufweist und als Vier-Wege-Katalysator (34) ausgebildet ist.

13. Abgasnachbehandlungssystem nach einem der Ansprüche 11 oder 12, **dadurch gekennzeichnet, dass** stromabwärts des ersten Drei-Wege-Katalysators (30) und stromaufwärts des Partikelfilters (32) eine zweite Lambdasonde (42) und stromabwärts des Partikelfilters (32) und stromaufwärts des zweiten Drei-Wege-Katalysators (36) eine dritte Lambdasonde (44) im Abgaskanal (38) angeordnet sind.

14. Abgasnachbehandlungssystem nach einem der Ansprüche 10 bis 13, **dadurch gekennzeichnet, dass** ein Sekundärluftsystem (28, 54, 56) vorgesehen ist, mit welchem in den Auslass (16) des Verbrennungsmotors (10) oder in die Abgasanlage (20) stromabwärts des Auslasses (16) und stromaufwärts des ersten Drei-Wege-Katalysators (30) Sekundärluft einblasbar ist.

## Claims

1. Method for the exhaust-gas aftertreatment of an internal combustion engine (10), the outlet (16) of which is connected to an exhaust-gas system (20), wherein, in the exhaust-gas system (20), in a flow direction of an exhaust gas through the exhaust-gas system (20), there are arranged a first three-way catalytic converter (30) and a second three-way catalytic converter (34, 36) downstream of the first three-way catalytic converter (30), wherein, in an exhaust-gas channel (38) of the exhaust-gas system (20), a first lambda probe (40) is arranged upstream of the first three-way catalytic converter (30) and a further lambda probe (42, 44) is arranged downstream of the first three-way catalytic converter (30) and upstream of the second three-way catalytic converter (34, 36), comprising the following steps:
- ascertaining the component temperatures (T_{K1}, T_{K2}) of the first and second three-way catalytic converters (30, 34, 36),
- comparing the component temperature (T_{K1}, T_{K2}) with the respective light-off temperature (T_{LOK1}, T_{LOK2}) of the first and second three-way catalytic converters (30, 34, 36), and
- performing closed-loop lambda control of the internal combustion engine (10) by means of the lambda probe (40, 42, 44) upstream of the last three-way catalytic converter (30, 34, 36) which has reached its light-off temperature.

2. Method according to Claim 1, **characterized in that** the closed-loop lambda control is performed in accordance with the principle of closed-loop natural frequency control.

3. Method according to Claim 1 or 2, **characterized in that**, after a cold start of the internal combustion engine (10), the closed-loop lambda control is performed by means of the first lambda probe (40) upstream of the first three-way catalytic converter (30).

4. Method according to any of Claims 1 to 3, **characterized in that**, when the light-off temperature (T_{LOK2}) of a three-way catalytic converter (34, 36) arranged further downstream in the exhaust-gas system (20) is attained, the closed-loop lambda control is expanded to include the lambda probe upstream of said three-way catalytic converter (34, 36).

5. Method according to any of Claims 1 to 4, **characterized in that** the exhaust-gas aftertreatment system (20) additionally comprises a particle filter (32, 34), wherein, in addition to the component temperatures (T_{K1}, T_{K2}) of the three-way catalytic converters (30, 34, 36), the component temperature (T_{OPF}) of the particle filter (32, 34) is additionally ascertained.

6. Method according to Claim 5, **characterized in that**, above a threshold temperature (T_{S}) for the particle filter (32, 34), a possibility of regeneration for the particle filter (32, 34) is identified.

7. Method according to Claim 6, **characterized in that**, in the event of a need for regeneration of the particle filter (32, 34) being identified and at the same time a component temperature (T_{OPF}) above the threshold temperature (T_{S}) being identified, the internal combustion engine (10) is operated with a superstoichiometric combustion air ratio (λ > 1).

8. Method according to any of Claims 5 to 7, **characterized in that**, by means of the closed-loop control concept, a superstoichiometric amplitude is selected such that, in the relevant temperature range, a continuous regeneration of the soot retained in the particle filter (32, 34) occurs.

9. Method according to Claim 8, **characterized in that**, exclusively for the particle filter (32, 34), a correspondingly higher quantity of oxygen is provided in the exhaust gas, and the three-way catalytic converters (30, 36) are flowed through, within the closed-loop control oscillations, with a substantially stoichiometric exhaust gas.

10. Exhaust-gas aftertreatment system for an internal combustion engine (10), having an exhaust-gas system (20) in which, in a flow direction of an exhaust gas through an exhaust-gas channel (38) of the exhaust-gas system (20), there are arranged a first three-way catalytic converter (30) and at least one further three-way catalytic converter (34, 36) downstream of the first three-way catalytic converter (30), wherein a first lambda probe (40) is arranged upstream of the first three-way catalytic converter (30) and a further lambda probe (42, 44) is arranged downstream of the first three-way catalytic converter (30) and upstream of the second three-way catalytic converter (34, 36), and having a control unit (50) which is configured to carry out a method according to any of Claims 1 to 9 when a machine-readable program code is executed by the control unit (50).

11. Exhaust-gas aftertreatment system according to Claim 10, **characterized in that** a particle filter (32, 34) is arranged downstream of the first three-way catalytic converter (30) and upstream of the second three-way catalytic converter (36).

12. Exhaust-gas aftertreatment system according to Claim 11, **characterized in that** the particle filter (32) has a catalytically active coating and is configured as a four-way catalytic converter (34) .

13. Exhaust-gas aftertreatment system according to either of Claims 11 and 12, **characterized in that** a second lambda probe (42) is arranged in the exhaust-gas channel (38) downstream of the first three-way catalytic converter (30) and upstream of the particle filter (32), and a third lambda probe (44) is arranged in the exhaust-gas channel (38) downstream of the particle filter (32) and upstream of the second three-way catalytic converter (36).

14. Exhaust-gas aftertreatment system according to any of Claims 10 to 13, **characterized in that** a secondary air system (28, 54, 56) is provided, by means of which secondary air can be injected into the outlet (16) of the internal combustion engine (10) or into the exhaust-gas system (20) downstream of the outlet (16) and upstream of the first three-way catalytic converter (30).

## Revendications

1. Procédé de post-traitement de gaz d'échappement d'un moteur à combustion interne (10) dont la sortie (16) est reliée à un système de gaz d'échappement (20), un premier convertisseur catalytique à trois voies (30) et, en aval du premier convertisseur catalytique à trois voies (30), un deuxième convertisseur catalytique à trois voies (34, 36) étant disposés dans le système de gaz d'échappement (20) dans le sens d'écoulement d'un gaz d'échappement à travers le système de gaz d'échappement (20), une première sonde lambda (40) étant disposée dans un conduit de gaz d'échappement (38) du système de gaz d'échappement (20) en amont du premier convertisseur catalytique à trois voies (30) et une autre sonde lambda (42, 44) étant disposée en aval du premier convertisseur catalytique à trois voies (30) et en amont du deuxième convertisseur catalytique à trois voies (34, 36), le procédé comprenant les étapes suivantes :
- déterminer des températures de composants (T_{K1}, T_{K2}) du premier et du deuxième convertisseur catalytique à trois voies (30, 34, 36),
- comparer la température de composants (T_{K1}, T_{K2}) avec la température de démarrage respective (T_{LOK1}, T_{LOK2}) du premier et du deuxième convertisseur catalytique à trois voies (30, 34, 36) et
- effectuer une régulation lambda du moteur à combustion interne (10) par le biais de la sonde lambda (40, 42, 44) en amont du dernier convertisseur catalytique à trois voies (30, 34, 36), qui a atteint sa température de démarrage.

2. Procédé selon la revendication 1, **caractérisé en ce que** la régulation lambda s'effectue selon le principe de la régulation de fréquence propre.

3. Procédé selon la revendication 1 ou 2, **caractérisé en ce que**, après un démarrage à froid du moteur à combustion interne (10), la régulation lambda s'effectue par le biais de la première sonde lambda (40) en amont du premier convertisseur catalytique à trois voies (30).

4. Procédé selon l'une des revendications 1 à 3, **caractérisé en ce que**, lorsque la température de démarrage (T_{LOK2}) d'un autre convertisseur catalytique à trois voies (34, 36) disposé en aval dans le système de gaz d'échappement (20) est atteinte, la régulation lambda est étendue par la sonde lambda en amont de ce catalyseur à trois voies (34, 36).

5. Procédé selon l'une des revendications 1 à 4, **caractérisé en ce que** le système de post-traitement de gaz d'échappement (20) comprend en outre un filtre à particules (32, 34), la température de composant (T_{OPF}) du filtre à particules (32, 34) étant également déterminée en plus des températures des composants (T_{K1}, T_{K2}) des convertisseurs catalytiques à trois voies (30, 34, 36) .

6. Procédé selon la revendication 5, **caractérisé en ce qu'**une possibilité de régénération du filtre à particules (32, 34) est détectée au-dessus d'une température seuil (T_{S}) pour le filtre à particules (32, 34) .

7. Procédé selon la revendication 6, **caractérisé en ce que**, lors de la détection d'un besoin de régénération du filtre à particules (32, 34) et de la détection simultanée d'une température de composant (T_{OPF}) au-dessus de la température seuil (T_{S}), le moteur à combustion interne (10) fonctionne avec un rapport d'air de combustion super-stœchiométrique (λ>1).

8. Procédé selon l'une des revendications 5 à 7, **caractérisé en ce qu'**une amplitude super-stœchiométrique est choisie au moyen du concept de régulation de manière à ce qu'une régénération continue de la suie retenue dans le filtre à particules (32, 34) soit effectuée dans la plage de température concernée.

9. Procédé selon la revendication 8, **caractérisé en ce qu'**une quantité d'oxygène relativement plus élevée est fournie dans le gaz d'échappement exclusivement pour le filtre à particules (32, 34) et un gaz d'échappement sensiblement stœchiométrique s'écoule à travers les convertisseurs catalytiques à trois voies (30, 36) à l'intérieur des oscillations de régulation.

10. Système de post-traitement de gaz d'échappement d'un moteur à combustion interne (10) avec un système de gaz d'échappement (20) dans lequel un premier convertisseur catalytique à trois voies (30) et, en aval du premier convertisseur catalytique à trois voies (30), au moins un autre convertisseur catalytique à trois voies (34, 36) sont disposés dans le système de gaz d'échappement (20) dans le sens d'écoulement d'un gaz d'échappement à travers un conduit de gaz de d'échappement (38), une première sonde lambda (40) étant disposée en amont du premier catalyseur à trois voies (30) et une autre sonde lambda (42, 44) étant disposée en aval du premier catalyseur à trois voies (30) et en amont du deuxième convertisseur catalytique à trois voies (34, 36), ainsi qu'une unité de commande (50) qui est conçue pour mettre en œuvre un procédé selon l'une des revendications 1 à 9 lorsqu'un code de programme lisible par machine est exécuté par l'unité de commande (50).

11. Système de post-traitement de gaz d'échappement selon la revendication 10, **caractérisé en ce qu'**un filtre à particules (32, 34) est disposé en aval du premier convertisseur catalytique à trois voies (30) et en amont du deuxième convertisseur catalytique à trois voies (36).

12. Système de post-traitement de gaz d'échappement selon la revendication 11, **caractérisé en ce que** le filtre à particules (32) comporte un revêtement catalytiquement actif et est conçu sous la forme d'un convertisseur catalytique à quatre voies (34).

13. Système de post-traitement de gaz d'échappement selon l'une des revendications 11 et 12, **caractérisé en ce qu'**une deuxième sonde lambda (42) est disposée en aval du premier catalyseur à trois voies (30) et en amont du filtre à particules (32), et une troisième sonde lambda (44) est disposée dans le conduit de gaz d'échappement (38) en aval du filtre à particules (32) et en amont du deuxième convertisseur catalytique à trois voies (36).

14. Système de post-traitement de gaz d'échappement selon l'une des revendications 10 à 13, **caractérisé en ce qu'**un système d'air secondaire (28, 54, 56) est prévu qui permet d'insuffler de l'air secondaire dans la sortie (16) du moteur à combustion interne (10) ou dans le système de gaz d'échappement (20) en aval de la sortie (16) et en amont du premier convertisseur catalytique à trois voies (30).
